# EUROPÄISCHE PATENTANMELDUNG

(11) **EP 1 037 027 A2**
(43) Veröffentlichungstag der Anmeldung: **20.09.2000**
(21) Anmeldenummer: 00103945.2
(22) Anmeldetag: 25.02.2000
(51) Int. Cl.: G01J 5/08, G01J 5/10

(54) **Sensor für Personendetektion**

(30) Priorität: 08.03.1999 DE 19910120
(71) Anmelder: ABB PATENT GmbH, 68309 Mannheim (DE)
(72) Erfinder: Lang, Jens-Olaf, Dipl.-Ing., 01462 Cossebaude (DE); Zimmerhackl, Manfred, Dr.-Ing. habil., 01705 Pesterwitz (DE); Norkus, Volkmar, Dr.-Ing., 01705 Pesterwitz (DE); Hofmann, Günter, Prof. Dr. Ing. habil., 01705 Pesterwitz (DE); Rosch, Rainer, Dr.-Ing., 58513 Lüdenscheid (DE); Zapp, Robert, Dipl.-Ing., 58579 Schalksmühle (DE)
(74) Vertreter: Miller, Toivo

(57) **Zusammenfassung**

Die Erfindung bezieht sich auf einen Passiv-Infrarot-Sensor zur Detektion von Personen, insbesondere zur Erkennung auch kleiner Bewegungen von Personen. Solche Sensoren sind in Bewegungsmeldern einsetzbar. Zur Verringerung der Abhängigkeit der Sensorempfindlichkeit von der Bewegungsrichtung einer zu detektierenden Person wird ein Passiv-Infrarot-Sensor vorgeschlagen, bei dem mehrere kompensierte Sensor-Elementgruppen (2) in einer Sensormatrix (3) angeordnet und elektrisch mit einer Signalverarbeitung (4) verbunden sind, jede Sensor-Elementgruppe (2) zwei Elemente (1, 1 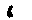 ) mit um 180° verschiedenen Vorzugsrichtungen enthält und Sensor-Elementgruppen (2) so gegeneinander versetzt angeordnet sind, daß sich mindestens vier gegeneinander versetzte Vorzugsrichtungen ergeben.

## Beschreibung

Die Erfindung bezieht sich auf einen Passiv-Infrarot-Sensor zur Detektion von Personen, insbesondere zur Erkennung auch kleiner Bewegungen von Personen. Solche Sensoren sind in Bewegungsmeldern einsetzbar.

Infrarotsensoren und deren Arbeitsweise sind beispielsweise in dem Fachbuch 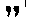 Passiv-Infrarotbewegungsmelder" Verlag moderne Industrie Landsberg/Lech, (Die Bibliothek der Technik, Band 131), Seiten 8 bis 17, beschrieben.

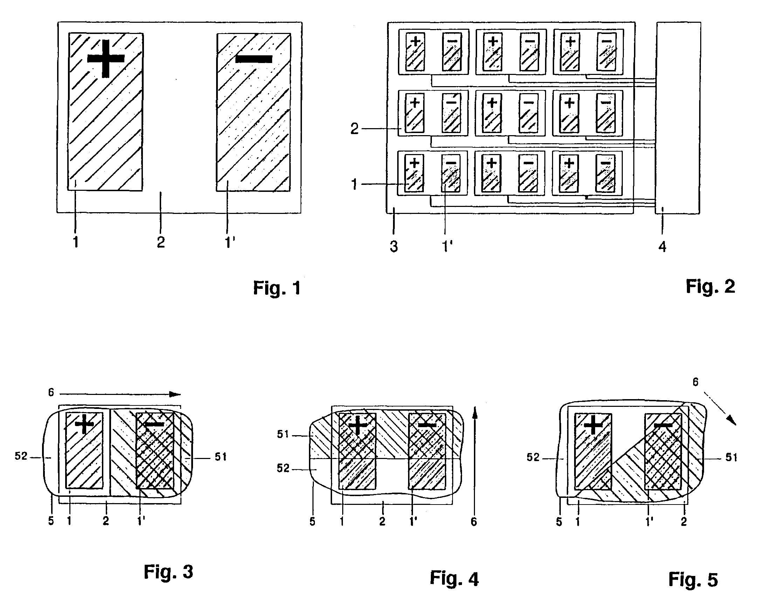

Aus dem Stand der Technik sind außer Sensoren mit einzelnen Elementgruppen auch Matrixanordnungen mit mehreren Elementgruppen bekannt. Mit bekannten Matrixanordnungen kann zwar die Empfindlichkeit eines Sensors gesteigert werden, jedoch ist eine starke Abhängigkeit der Empfindlichkeit von der Bewegungsrichtung einer Person gegeben. Diese Gegebenheit wird nachstehend anhand der Fig. 1 bis 5 näher erläutert.

In Passiv-lnfrarot-Bewegungsmeldern werden spezielle Infrarot-Sensoren verwendet, die in den meisten Fällen zwei empfindliche Sensorelemente enthalten. Beide Sensorelemente sind direkt zusammengeschaltet und bilden eine kompensierte Elementgruppe mit einem Signalausgang. Die Kompensation ergibt sich aus der Differenzbildung der Ausgangssignale der beiden einzelnen empfindlichen Sensorelemente. Fällt auf beide Sensorelemente Strahlung gleicher Intensität, ist das resultierende Ausgangssignal der Elementgruppe gleich Null. Unterschiedliche Strahlungsintensitäten auf beiden empfindlichen Sensorelementen führen dagegen zu einem Ausgangssignal der Elementgruppe, das der Differenz der Ausgangssignale der einzelnen empfindlichen Sensorelemente entspricht.

In Fig. 1 ist eine typische Anordnung zweier empfindlicher Sensorelemente 1, 1' in einer kompensierten Elementgruppe 2 dargestellt. Die beiden rechteckförmigen empfindlichen Sensorelemente 1, 1' können pyroelektrische Elemente sein. Mit Hilfe einer speziellen Optik, z.B. einer Multifresnellinsenoptik, wird die Infrarot-Strahlung aus bestimmten Sektoren des zu überwachenden Raumes auf die beiden empfindlichen Sensorelemente 1, 1' abgebildet. Geht die Strahlung von einem homogenen Hintergrund aus, empfangen beide Sensorelemente 1, 1' Strahlung gleicher Intensität und liefern somit das gleiche Ausgangssignal. Das Ausgangssignal der Elementgruppe 2 ist damit Null, da es sich aus der Differenz der Ausgangssignale der beiden einzelnen empfindlichen Sensorelemente 1,1' zusammensetzt. Auch bei einer Änderung der Temperatur des homogenen Hintergrundes bleibt das Ausgangssignal der Elementgruppe 2 gleich Null, da sich die Änderung der Intensität der abgegebenen Infrarot-Strahlung immer gleichermaßen auf beide empfindlichen Sensorelemente 1,1' auswirkt. Bewegt sich andererseits eine Person im überwachten Raum derart, daß auf beide empfindliche Sensorelemente 1,1 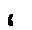 Strahlung unterschiedlicher Intensität gelangt, entsteht am Ausgang der Elementgruppe ein entsprechendes Ausgangssignal.

Zur Erhöhung der räumlichen Auflösung des Passiv-Infrarot-Bewegungsmelders, das heißt zur Detektion auch kleinerer Bewegungen der zu erfassenden Person ist es naheliegend, mehrere Elementgruppen 2 mit den empfindlichen Sensorelementen 1,1' matrixartig anzuordnen. Fig. 2 zeigt einen möglichen Aufbau. Die Elementgruppen 2 wurden in einer Sensormatrix 3 angeordnet, wobei die Ausgangssignale jeder Elementgruppe 2 einer Signalverarbeitung 4 zugeführt werden. Die Verknüpfung der einzelnen Ausgangssignale der Elementgruppen 2 in der Signalverarbeitung 4 liefert dann ebenfalls ein zum erfaßten Strahlungsintensitätsunterschied proportionales Ausgangssignal.

Gerade für die gewünschte Detektion auch kleinerer Bewegungen hat diese Anordnung nach Fig. 2 den Nachteil einer erheblichen Abhängigkeit der Empfindlichkeit von der Richtung der auftretenden Strahlungsintensitätsunterschiede. Die Figuren 3, 4 und 5 verdeutlichen diese Zusammenhänge. Infrarot-Strahlung 5 unterschiedlicher Intensität 51, 52 trifft auf die empfindlichen Sensorelemente 1, 1' einer Elementgruppe 2. Je nach Ausrichtung 6 des Intensitätsunterschiedes entstehen unterschiedliche Ausgangssignale am Ausgang der Elementgruppe 2 bzw. der Signalverarbeitung 4. In der Anordnung nach Fig. 3 fällt auf die gesamte Fläche des empfindlichen Sensorelements 1' Strahlung mit der Intensität 51, während das andere empfindliche Sensorelement 1 Strahlung der Intensität 52 empfängt. Es entsteht ein auf den Strahlungsintensitätsunterschied bezogenes maximales Ausgangssignal der Elementgruppe 2 bzw. der Signalverarbeitung 4. Ganz anders sind die Verhältnisse in Fig. 4. Auch hier trifft Strahlung 5 mit unterschiedlicher Intensität 51, 52 auf, aber die betreffenden Flächenanteile beider empfindlicher Sensorelemente 1, 1' sind gleich groß. Damit ist das Ausgangssignal der Elementgruppe 2 bzw. der Signalverarbeitung 4 Null. Ein gegenüber dem Maximalsignal von Fig. 3 entsprechend reduziertes Ausgangssignal der Elementgruppe 2 bzw. der Signalverarbeitung 4 tritt bei Anordnungen nach Fig. 5 auf. Insgesamt ist also eine erhebliche Abhängigkeit der Detektionsempfindlichkeit von der Richtung der auftretenden Intensitätsunterschiede und damit von der Bewegungsrichtung der zu erfassenden Person festzustellen.

Der Erfindung liegt daher die Aufgabe zugrunde, eine Anordnung von kompensierten Elementgruppen für einen Passiv-Infrarot-Sensor mit reduzierter Richtungsabhängigkeit seiner Empfindlichkeit zur Detektion kleiner Bewegungen von Personen anzugeben.

Diese Aufgabe wird durch einen Passiv-Infrarot-Sensor mit den im Anspruch 1 angegebenen Merkmalen gelöst. Der Sensor enthält eine matrixförmige Anordnung mehrerer kompensierter Elementgruppen mit mindestens vier unterschiedlichen Vorzugsrichtungen. Bei einer bevorzugten Anordnung werden Elementgruppen mit zwei rechteckförmigen empfindlichen Sensorelementen verwendet, die matrixartig symmetrisch ineinander geschachtelt sind und über vier Vorzugsrichtungen verfügen, die um 90° gegeneinander versetzt sind. Die empfindlichen Sensorelemente können pyroelektrische Elemente sein, andere strahlungsempfindliche Elemente sind jedoch ebenfalls möglich. Geeignete Algorithmen zur Auswertung der von Elementgruppen gelieferten Sensorsignale in einer Einrichtung zur Signalverarbeitung sind aus dem Stand der Technik bekannt.

Eine weitere Beschreibung des erfindungsgemäßen Sensors erfolgt nachstehend anhand eines in Zeichnungsfiguren dargestellten Ausführungsbeispiels, wobei die Fig. 1 bis 5 den oben erläuterten Stand der Technik wiedergeben.

Es zeigen:
- Fig. 1: eine kompensierte Elementgruppe,
- Fig. 2: eine Matrixanordnung mit mehreren Elementgruppen, die mit einer Signalverarbeitung verbunden sind,
- Fig. 3 bis 5: Darstellungen zur Erläuterung der Richtungsabhängigkeit bekannter Anordnungen,
- Fig. 6: eine erfindungsgemäße matrixförmige Anordnung von Elementgruppen, und
- Fig. 7: eine Darstellung einer einzelnen Elementgruppe aus Fig. 6.

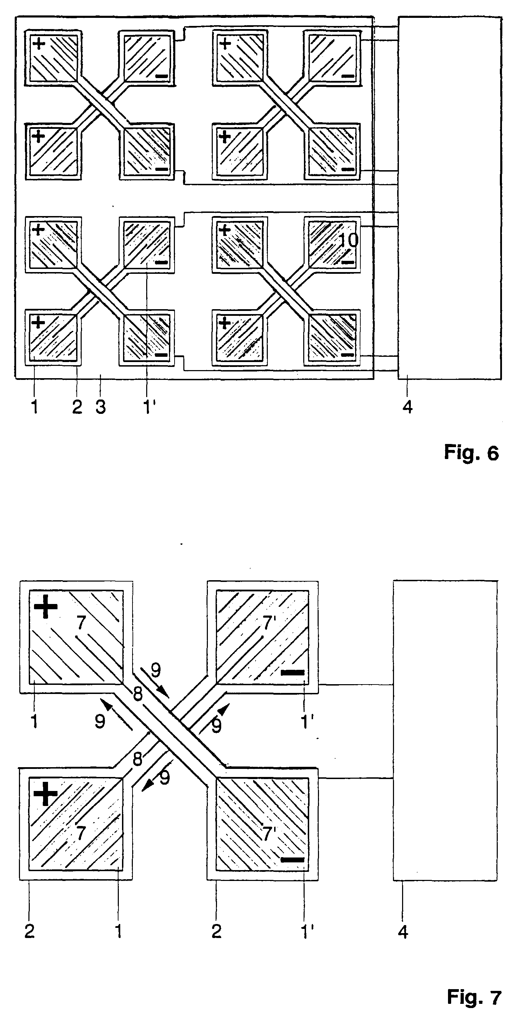

Fig. 6 zeigt eine Anordnung, bei der jeweils zwei empfindliche Sensorelemente 1, 1', die zur Detektion der Infrarot-Strahlung den pyroelektrischen Effekt verwenden, eine kompensierte Elementgruppe 2 bilden, die mit einer Signalverarbeitung 4 verbunden ist. Die Elementgruppen 2 sind symmetrisch in einer Sensormatrix 3 angeordnet. Jede Elementgruppe 2 besitzt zwei Vorzugsrichtungen 9, die in Fig. 7 erläutert sind.

Fig. 7 zeigt zwei Elementgruppen 2, bei der die Mittelpunkte 7, 7' der beiden empfindlichen Sensorelemente 1,1' einer Elementgruppe 2 mit einer Verbindungsgeraden 8 miteinander verbunden sind. Die beiden um 180° verschiedenen Vorzugsrichtungen 9 der Elementgruppe 2 verlaufen parallel zu dieser Verbindungsgeraden 8.

In der Sensormatrix 3 in Fig. 6 befinden sich mehrere ineinandergeschachtelte Elementgruppen 2, die insgesamt über vier um 90° versetzte Vorzugsrichtungen verfügen. Diese vier, jeweils um 90° versetzten Vorzugsrichtungen bewirken eine weitgehende Unabhängigkeit der Empfindlichkeit von der Bewegungsrichtung einer detektierten Person. Es versteht sich, daß auch Kombinationen von Elementgruppen mit unter anderem Winkel versetzten Vorzugsrichtungen anordenbar sind.

Der beschriebene Sensortyp gemäß Fig. 6 wurde als Systemversuchsaufbau realisiert. Der Sensor bestand dabei aus einem ca. 20 µm dünnen pyroelektrischen Lithiumtantalat-Chip mit fotolithografisch strukturierter Sensormatrix und einem CMOS-Ausleseschaltkreis einschließlich Multiplexer. Pyroelektrisches Chip und Ausleseschaltkreis waren in einem Metallhermetikgehäuse mit IR-durchlässigem Fenster (8...14 µm) montiert. Der Sensor wurde in einem Versuchsaufbau betrieben, der die Sensorstrom- und -taktversorgung, einen Analogkanal, die A/D-Wandlung und eine digitale Schnittstelle enthielt. Über diese digitale Schnittstelle wurden die Sensorsignale mit Hilfe einer speziellen Rechnerkarte in einen PC übertragen. Diese Signale wurden auf dem Rechnerbildschirm visualisiert und mittels spezieller Auswertesoftware so bearbeitet, daß ein Bewegungsmeldertestbetrieb möglich war. Im Versuchsbetrieb bestätigten sich die zu erwartenden vorteilhaften Eigenschaften des Sensors.

## Patentansprüche

1. Passiv-Infrarot-Sensor zur Verwendung in einem Bewegungsmelder, wobei
a) mehrere kompensierte Sensor-Elementgruppen (2) in einer Sensormatrix (3) angeordnet und elektrisch mit einer Signalverarbeitung (4) verbunden sind,
b) jede Sensor-Elementgruppe (2) zwei Elemente (1, 1 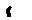 ) mit um 180° verschiedenen Vorzugsrichtungen (9) enthält, und
c) Sensor-Elementgruppen (2) so gegeneinander versetzt angeordnet sind, daß sich mindestens vier gegeneinander versetzte Vorzugsrichtungen (9) ergeben.

2. Passiv-Infrarot-Sensor nach Anspruch 1, dadurch gekennzeichnet, daß Sensor-Elementgruppen (2) so gegeneinander versetzt angeordnet sind, daß sich vier jeweils um 90° gegeneinander versetzte Vorzugsrichtungen (9) ergeben.

3. Passiv-Infrarot-Sensor nach Anspruch 1 oder 2, dadurch gekennzeichnet, daß rechteckförmige Sensorelemente (1, 1 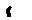 ) verwendet sind.

4. Passiv-Infrator-Sensor nach einem der vorstehenden Ansprüche, dadurch gekennzeichnet, daß die Sensorelemente pyroelektrische Elemente sind.
